(19) Europäisches Patentamt
European Patent Office
Office européen des brevets

(11) **EP 4 596 300 A1**

(12) **EUROPEAN PATENT APPLICATION**
published in accordance with Art. 153(4) EPC

(43) Date of publication:
**06.08.2025 Bulletin 2025/32**

(21) Application number: **23877120.8**

(22) Date of filing: **25.09.2023**

(51) International Patent Classification (IPC):
***B60L 15/20*** (2006.01)

(52) Cooperative Patent Classification (CPC):
**B60L 15/20;** Y02T 10/72

(86) International application number:
**PCT/JP2023/034677**

(87) International publication number:
**WO 2024/080114 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.10.2022 JP 2022165435**

(71) Applicant: **Mitsubishi Heavy Industries, Ltd.
Tokyo 100-8332 (JP)**

(72) Inventors:
• **HIROE Takaharu
Tokyo 100-8332 (JP)**
• **SASE Ryo
Tokyo 100-8332 (JP)**

(74) Representative: **Studio Torta S.p.A.
Via Viotti, 9
10121 Torino (IT)**

(54) **RE-ADHESION CONTROL APPARATUS, RE-ADHESION CONTROL METHOD, AND PROGRAM**

(57) A traction recovery control apparatus includes: a slip state determiner configured to determine whether a driving wheel of a vehicle is in a slip state or in a traction state based on a slip speed of the driving wheel with respect to a road surface, and a slip threshold and a traction threshold; and a limit cycle generator configured to output an increase/decrease signal for gradually increasing or gradually decreasing a driving force of the driving wheel based on a determination result of the slip state determiner, and generate a limit cycle passing through a traction force maximum value between the driving wheel and the road surface.

FIG. 2

EP 4 596 300 A1

**Description**

TECHNICAL FIELD

The present disclosure relates to a traction recovery control apparatus, a traction recovery control method, and a program.

Priority is claimed on Japanese Patent Application No. 2022-165435, filed October 14, 2022, the content of which is incorporated herein by reference.

BACKGROUND ART

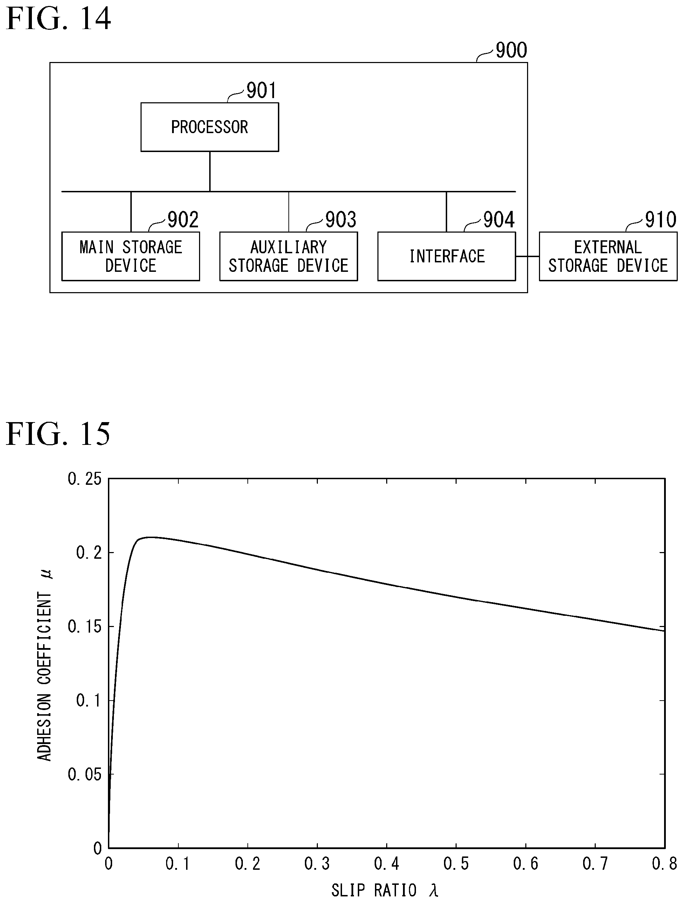

Acceleration and deceleration of a vehicle are performed by increasing and decreasing the power of an internal combustion engine or an electric motor that drives the wheel (driving wheel). However, the traction force between the wheel and the road surface or the railroad track is limited by the traction coefficient $\mu$. For example, when the normal force of the wheel is W, the maximum value of the traction force is $\mu$W. As shown in FIG. 15, the traction coefficient $\mu$ is not a constant value, but depends on the slip ratio $\lambda$ of the wheel, and there is a slip ratio $\lambda$ at which the traction coefficient $\mu$ is maximized (maximum value, peak). The slip ratio $\lambda$ is a value obtained by dividing the difference in circumferential speed between the wheel and the road surface by the circumferential speed on the driving side. When the slip ratio $\lambda$ is between 0 and the maximum value (in the example of FIG. 15, $\lambda \approx 0.05$) (adhesive region), the traction coefficient $\mu$ increases as the slip ratio $\lambda$ increases. On the other hand, in a state where the slip ratio $\lambda$ is greater than the maximum value (wheel spin region), the traction coefficient $\mu$ decreases as the slip ratio $\lambda$ increases. Therefore, in the example of FIG. 15, when the vehicle is driven with the slip ratio set to about 0.05, acceleration and deceleration of the vehicle are maximized.

However, the graph of the slip ratio $\lambda$ and the traction coefficient $\mu$ changes in shape depending on the state of the road surface, for example, whether the road surface is in a dry state or a wet state. Therefore, it is necessary to search for the maximum value in order to operate at the maximum value of the traction coefficient $\mu$. In the first place, since the traction coefficient $\mu$ or the traction force corresponding to the slip ratio $\lambda$ cannot be directly measured before searching the maximum value, another effort such as estimating the traction coefficient $\mu$ from other measured values is further required. It goes without saying that such a technology is not essential as long as the desired driving force of the vehicle is sufficiently smaller than the maximum value of the traction force. Such a technology is valuable when a driving force close to the maximum value of traction force or momentarily exceeding the maximum value of traction force is desireable, such as when climbing a slope while accelerating on a wet road surface, as the technology stably provides a driving force close to the maximum value.

In Patent Document 1, a traction coefficient $\mu$ corresponding to a slip ratio $\lambda$ is estimated from the measured values of an output torque of an electric motor, which is a power unit, and the slip ratio $\lambda$. Statically, since the output torque of the electric motor does not exceed the traction force, it is possible in principle to estimate the traction coefficient from the output torque of the electric motor.

Citation List

Patent Document

Patent Document 1: Japanese Patent No. 5940290

SUMMARY OF INVENTION

Technical Problem

At the moment when the wheel touches, for example, wet fallen leaves and the traction coefficient changes, the appropriate value of the traction coefficient $\mu$ for the wet fallen leaves is not known. In the related art, in order to estimate the value of the traction coefficient $\mu$, it is necessary to wait for the collection of data of the torque and the slip ratio. In addition, in the related art, since it takes time to perform the calculation of estimating the traction coefficient, sufficient responsiveness cannot be obtained. Therefore, in the related art in which the vehicle is controlled based on the estimated value of the traction coefficient, it is difficult to follow a sudden change in the maximum value of the traction coefficient, such as in a case where wet fallen leaves are run over, and there is a possibility that the traction force between the wheel and the road surface is reduced.

An object of the present disclosure is to provide a traction recovery control apparatus, a traction recovery control method, and a program that can restore traction of a driving wheel to a road surface and maintain the traction force between the driving wheel and the road surface in a high state when wheel spin or skidding occurs.

Solution to problem

According to an aspect of the present disclosure, there is provided a traction recovery control apparatus includes: a slip state determiner configured to determine whether a driving wheel of a vehicle is in a slip state or in a traction state based on a slip speed of the driving wheel with respect to a road surface, and a slip threshold and a traction threshold; and a limit cycle generator configured to output an increase/decrease signal for gradually increasing or gradually decreasing a driving force of the driving wheel based on a determination result of the slip state determiner, and generate a limit cycle passing through a traction force maximum value between the driving wheel and the road surface.

According to another aspect of the present disclosure, there is provided a traction recovery control method including: a step of determining whether a driving wheel of a vehicle is in a slip state or in a traction state based on a slip speed of the driving wheel with respect to a road surface, and a slip threshold and a traction threshold; and a step of outputting an increase/decrease signal for gradually increasing or gradually decreasing a driving force of the driving wheel based on a determination result of the slip state determiner, and generating a limit cycle passing through a traction force maximum value between the driving wheel and the road surface.

According to still another aspect of the present disclosure, a program is provided that causes a traction recovery control apparatus to execute: a step of determining whether a driving wheel of a vehicle is in a slip state or in a traction state based on a slip speed of the driving wheel with respect to a road surface, and a slip threshold and a traction threshold; and a step of outputting an increase/decrease signal for gradually increasing or gradually decreasing a driving force of the driving wheel based on a determination result of the slip state determiner, and generating a limit cycle passing through a traction force maximum value between the driving wheel and the road surface. Advantageous Effects of Invention

According to the above aspect, it is possible to restore traction of the driving wheel to the road surface when the wheel spin or the skidding occurs and to maintain the traction force between the driving wheel and the road surface in a high state.

BRIEF DESCRIPTION OF DRAWINGS

[FIG. 1] A schematic diagram showing an overall configuration of a vehicle according to a first embodiment.
[FIG. 2] A block diagram showing a functional configuration of a traction recovery control apparatus according to the first embodiment.
[FIG. 3] A diagram for explaining a function of the traction recovery control apparatus according to the first embodiment.
[FIG. 4] A block diagram showing a functional configuration of a traction recovery control apparatus according to a modification example of the first embodiment.
[FIG. 5] A first diagram for explaining a function of the traction recovery control apparatus according to the modification example of the first embodiment.
[FIG. 6] A second diagram for explaining a function of the traction recovery control apparatus according to the modification example of the first embodiment.
[FIG. 7] A third diagram for explaining a function of the traction recovery control apparatus according to the modification example of the first embodiment.
[FIG. 8] A fourth diagram for explaining a function of the traction recovery control apparatus according to the modification example of the first embodiment.
[FIG. 9] A block diagram showing a functional configuration of a traction recovery control apparatus according to a second embodiment.
[FIG. 10] A block diagram showing a functional configuration of a traction recovery control apparatus according to a third embodiment.
[FIG. 11] A diagram for explaining a function of a set value corrector according to the third embodiment.
[FIG. 12] A block diagram showing a functional configuration of a traction recovery control apparatus according to a fourth embodiment.
[FIG. 13] A diagram for explaining a function of the traction recovery control apparatus according to the fourth embodiment.
[FIG. 14] A schematic block diagram showing a configuration of a computer according to at least one embodiment.
[FIG. 15] A diagram showing an example of a traction coefficient.

DESCRIPTION OF EMBODIMENTS

<First Embodiment>

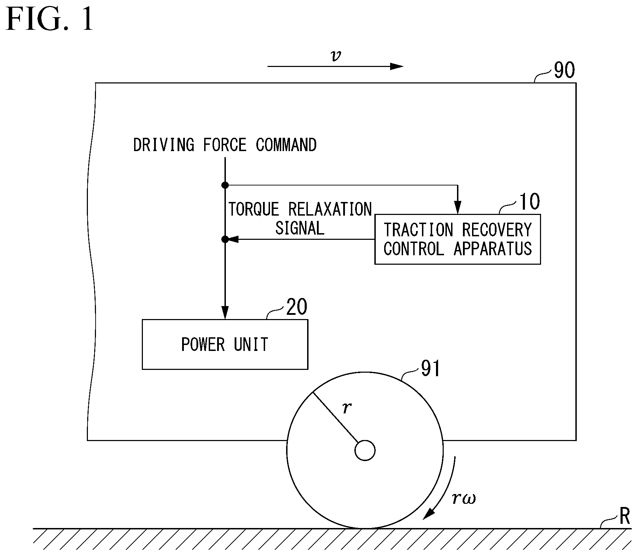

Hereinafter, a first embodiment will be described with reference to FIGS. 1 to 3.

(Overall Configuration)

FIG. 1 is a schematic diagram showing an overall configuration of a vehicle according to the first embodiment.
A vehicle 90 shown in FIG. 1 is, for example, a railway vehicle that travels on a trajectory. The vehicle 90 includes a traction recovery control apparatus 10 and a power unit 20 that drives a driving wheel 91.
The power unit 20 drives or brakes the driving wheel 91 in accordance with the driving force command. The traction recovery control apparatus 10 outputs a torque relaxation signal for increasing or decreasing the driving force command to maintain the traction force between the driving wheel 91 and a road surface R. The driving force command is calculated by a known vehicle control apparatus (not shown) according to an operation of an operator or the like.

(Functional Configuration of Traction Recovery Control Apparatus)

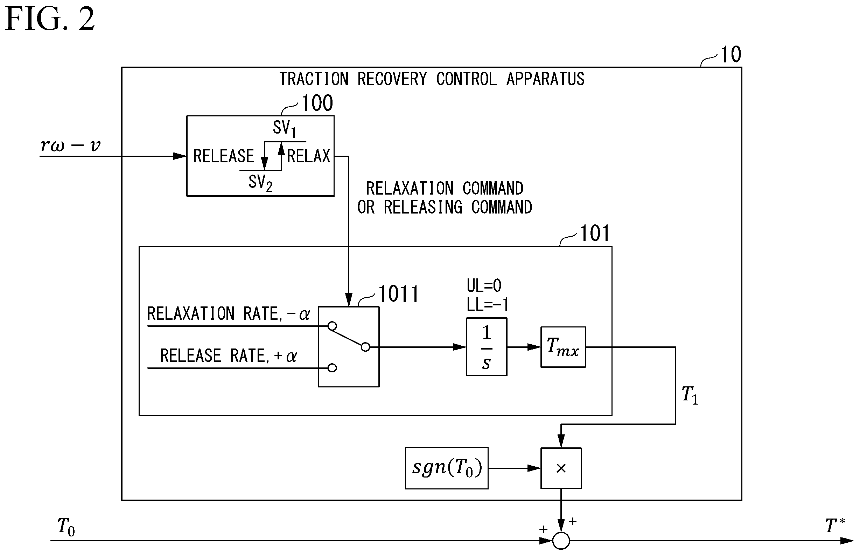

FIG. 2 is a block diagram showing a functional configuration of a traction recovery control apparatus according to the first embodiment.
As shown in FIG. 2, the traction recovery control apparatus 10 includes a slip state determiner 100 and a limit cycle generator 101.
The slip state determiner 100 determines whether the driving wheel 91 (driving wheel) of the vehicle 90 is in a slip state or in a traction state based on a slip speed of the driving wheel 91 with respect to a road surface.
The limit cycle generator 101 outputs an increase/decrease signal for gradually increasing or gradually decreasing the driving force (or braking force) of the driving wheel 91 based on the determination result of the slip state determiner 100 and generates a limit cycle passing through the maximum value of the traction force between the driving wheel 91 and the road surface R.

(Regarding Processing of Traction Recovery Control Apparatus)

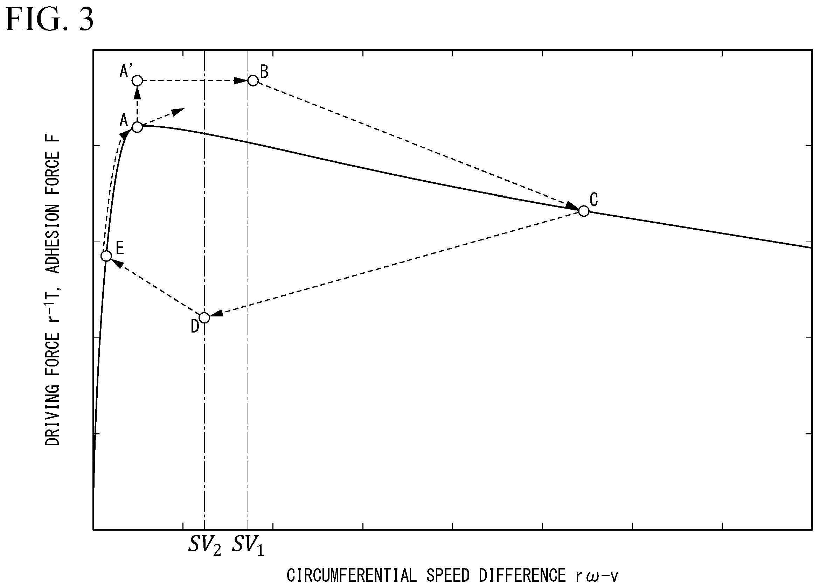

FIG. 3 is a diagram for explaining a function of the traction recovery control apparatus according to the first embodiment.
Here, the content of the specific processing of the traction recovery control apparatus 10 according to the present embodiment will be described with reference to FIG. 3.
In a case where the moment of inertia of the driving wheel 91 is J [kgm$^2$], the angular velocity of the driving wheel 91 is $\omega$ [rad/s], the radius of the driving wheel 91 is r [m], the speed of the vehicle 90 is v [m/s], the traction force between the driving wheel 91 and the road surface R is F [N], and the driving torque of the driving wheel 91 by the power unit 20 is T [Nm], the equation of motion of the driving wheel 91 is expressed as follows in Formula (1).
[Mathematical Formula 1]

$$r^{-1}J\dot{\omega} = r^{-1}T - F \qquad \cdot\cdot\cdot (1)$$

The traction force F is expressed as follows in Formula (2) from the traction coefficient $\mu$ that acts in the circumferential direction and depends on the circumferential speed difference r$\omega$-v (slip speed) between the road surface R and the driving wheel 91 and the normal force W (N) of the driving wheel 91.
[Mathematical Formula 2]

$$F = \mu(r\omega - v) \cdot W \qquad \cdot\cdot\cdot (2)$$

r$^{-1}$T in Formula (1) is a driving force [N] in the circumferential direction. The driving torque is a torque in a direction of increasing the kinetic energy of the driving wheel 91 (power torque of the power unit 20). In a case where the torque acts on the driving wheel 91 in a direction in which the kinetic energy of the driving wheel 91 is reduced, the torque is a braking torque (regenerative torque or braking torque of the power unit 20). The driving torque and the braking torque are only different in direction (positive or negative), and the slip of the driving wheel 91 is represented by the same equation.
In the present embodiment, an example will be described in which the traction recovery control apparatus 10 mainly functions as a wheel spin traction recovery control apparatus that detects a slip state (wheel spin) of the driving wheel 91 during the power running and restores traction of the driving wheel 91 by increasing or decreasing the driving torque, but the same technology can be applied to the braking torque. Therefore, the traction recovery control apparatus 10 also functions as a skidding traction recovery control apparatus that detects a slip state (skidding) of the driving wheel 91 during regeneration and restores traction of the driving wheel 91 by increasing or decreasing the braking torque. In a case of functioning as a skidding traction recovery control apparatus, "driving force", "driving force command", and "wheel spin" in the following description are each replaced with "braking force", "braking force command", and "skidding".

FIG. 3 shows a relationship between the driving force $r^{-1}T$ and the circumferential speed difference $r\omega$-v when the traction recovery control apparatus 10 of the present embodiment is operated. The relationship is shown through points A to E. Here, the horizontal axis represents the road surface R and the circumferential speed difference $r\omega$-v of the driving wheel 91, and the vertical axis represents the driving force $r^{-1}T$ or the traction force F. In addition, the solid line graph represents the traction force F with respect to the circumferential speed difference.

The slip state determiner 100 compares the input circumferential speed difference $r\omega$-v (slip speed) with the slip threshold $SV_1$ and the traction threshold $SV_2$. In a case where the circumferential speed difference exceeds the slip threshold $SV_1$, the slip state determiner 100 determines that the slip state is reached, and outputs a relaxation command to relax the driving force. In addition, in a case where the circumferential speed difference is the traction threshold $SV_2$ or less, the slip state determiner 100 determines that the traction state is reached, and outputs a releasing command to release the relaxation.

The limit cycle generator 101 outputs a torque relaxation increase/decrease signal based on the relaxation command or the releasing command input from the slip state determiner 100.

When the relaxation command is input to the limit cycle generator 101, the relaxation rate $-\alpha$ [rated torque/-second] is output from a relaxation release switch 1011 as a torque relaxation increase/decrease command. The torque relaxation increase/decrease command is time-integrated and multiplied by the rated torque $T_{mx}$ to obtain the torque relaxation increase/decrease signal. In addition, when the releasing command is input to the limit cycle generator 101, the relaxation rate $+\alpha$ [rated torque/second] is output from a relaxation release switch 1011 as a torque relaxation increase/decrease command, and the torque relaxation increase/decrease signal is restored toward 0. In the torque relaxation increase/decrease signal, the upper limit UL is set to 0, and the lower limit LL is set to -1. In the normal operating state where the wheel spin does not occur, the slip state determiner 100 continuously outputs the releasing command, and thus the torque relaxation increase/decrease signal is usually 0, which is the upper limit. When wheel spin occurs, the slip state determiner 100 outputs a relaxation command. Then, the limit cycle generator 101 decreases the torque relaxation increase/decrease signal from 0 to a relaxation rate of $-\alpha$.

In the present embodiment, the torque relaxation increase/decrease signal output by the limit cycle generator 101 is a torque relaxation signal $T_1$. The torque relaxation signal $T_1$ is for reducing (bringing closer to 0) a torque command $T_0$ before the wheel spin traction recovery control. When the sign of the torque command $T_0$ before the wheel spin traction recovery control is negative, the torque relaxation signal $T_1$ needs to be subtracted from the torque command $T_0$ before the wheel spin traction recovery control. The case classification based on the sign of the torque command $T_0$ before the wheel spin traction recovery control may be realized by, for example, a sign function $\text{sgn}(T_0)$. A value of the sign function $\text{sgn}(T_0)$ is 1 in a case where $T_0$ is positive and is -1 in a case where $T_0$ is negative. A torque command $T^*$ after the wheel spin traction recovery control is expressed as follows in Formula (3).

[Mathematical Formula 3]

$$T^* = T_0 + \text{sgn}(T_0) \cdot T_1 \qquad \cdots (3)$$

Here, a limit cycle generated by the traction recovery control apparatus 10 will be described with reference to FIG. 3.

In the example of FIG. 3, it is assumed that the initial state is the point A and the operation is performed at the circumferential speed difference at which the maximum traction force is obtained. In addition, it is assumed that the driving force is increased stepwise in this state to change the operating point to the point A', and then the driving force at the point A' is maintained. At the point A', since $r^{-1}T$ - F > 0, the driving wheel 91 is accelerated, and the locus of the operating point is moved from the point A' in the right direction.

The slip state determiner 100 inputs the circumferential speed difference $r\omega$-v and determines whether the driving wheel 91 is in the slip state or in the traction state. When the circumferential speed difference exceeds the slip threshold $SV_1$ at the point B, the slip state determiner 100 determines that the slip state is reached and outputs the relaxation command. The limit cycle generator 101 outputs a torque relaxation increase/decrease signal (torque relaxation signal $T_1$) for gradually decreasing the driving force based on the relaxation command. For example, the limit cycle generator 101 increases the torque relaxation signal $T_1$ on the negative side at a predetermined gradual reduction rate. The torque relaxation signal $T_1$ is added to the driving force command $T_0$, and as a result, the driving force is gradually decreased. Therefore, after the point B, the operating point moves downward with respect to the vertical axis. Since $r^{-1}T$ - F > 0 is satisfied on the horizontal axis, the driving wheel 91 is accelerated and the circumferential speed difference is increased, and thus the operating point moves to the right side even after the point B. In the end, the operating point moves to the lower right of the point B.

In a case where the gradual reduction rate is set to be sufficiently large on the negative side, the driving force decreases and eventually matches the traction force. In FIG. 3, a case where the driving force and the traction force match each other is represented by the point C. At the point C, the acceleration of the driving wheel 91 is stopped according to Formula (1), the increase in the circumferential speed difference is also stopped, and thereafter, the circumferential speed difference begins to decrease. As a result, the operating point moves to the lower left from the point C.

Thereafter, when the circumferential speed difference is reduced to the traction threshold $SV_2$, the slip state determiner 100 determines that the traction state is reached and outputs a releasing command. Then, the limit cycle generator 101 starts to release the relaxation signal. Specifically, in the example of FIG. 3, the slip state determiner 100 outputs the releasing command at the point D, and the limit cycle generator 101 switches from the control of gradually increasing the torque relaxation signal $T_1$ before the point D toward the negative side to the control of gradually decreasing the torque relaxation signal $T_1$. When the release of the relaxation signal is started, the driving force gradually increases. Therefore, the operating point moves upward with respect to the vertical axis after the point D. Regarding the circumferential speed difference, since $r^{-1}T - F < 0$ is still satisfied, the driving wheel 91 continuously decelerates, and the operating point moves from the point D toward the upper left.

Then, at the point E, the driving force and the traction force are balanced and the traction recovery is performed. Since the release of the relaxation signal is continued even after the point E where the traction recovery is performed, the operating point moves upward along the graph of the traction force F. When the release of the relaxation signal is continued even after the operating point reaches the point A at which the maximum value of the traction force is obtained, the wheel spin state is reached again, and the operating point is moved to the upper right (in the direction of the point B).

As described above, the traction recovery control apparatus 10 of the present embodiment gradually increases or gradually decreases the torque relaxation signal $T_1$ by the limit cycle generator 101 to increase or decrease the driving force in a ramp shape. In this case, when wheel spin occurs, the operating point creates a periodic trajectory (A → B → C → D → E → A) passing through the maximum value of the traction force on a two-dimensional plane consisting of the driving force and the circumferential speed difference, that is, a limit cycle. The second round of trajectory may be slightly shifted from the first round, but the same periodic trajectory is generated from the third round.

When the cause of the temporary decrease in the traction force (for example, running over wet fallen leaves) is eliminated, the traction force is improved, and the maximum traction force is larger than the point A', the wheel spin does not occur, and thus the periodic trajectory disappears. The wheel spin traction recovery control is a temporary function until the traction force between the driving wheel 91 and the road surface R is restored to the point A' or higher.

(Operation and Effects)

As described above, the traction recovery control apparatus 10 of the present embodiment includes the slip state determiner 100 that determines the slip state of the driving wheel 91 based on the slip speed, and the limit cycle generator 101 that outputs the increase/decrease signal $T_1$ for gradually increasing or gradually decreasing the driving force or the braking force of the driving wheel 91 based on the determination result of the slip state determiner 100.

With such a configuration, the traction recovery control apparatus 10 can obtain an effect of not only simply restoring traction of the driving wheel 91 that is wheel spin but also maintaining the traction force in a relatively high state by causing the limit cycle to occur around the maximum value of the traction force even when the wheel spin occurs.

In addition, since the traction recovery control apparatus 10 does not estimate the traction coefficient as in the related art, it is not necessary to collect data required for the estimation, and the time required for the calculation processing can be significantly shortened. Therefore, the traction recovery control apparatus 10 can perform a highly responsive traction recovery control capable of following a sudden change in the maximum value of the traction coefficient, for example, in a case where wet fallen leaves are run over.

<Modification Example of First Embodiment>

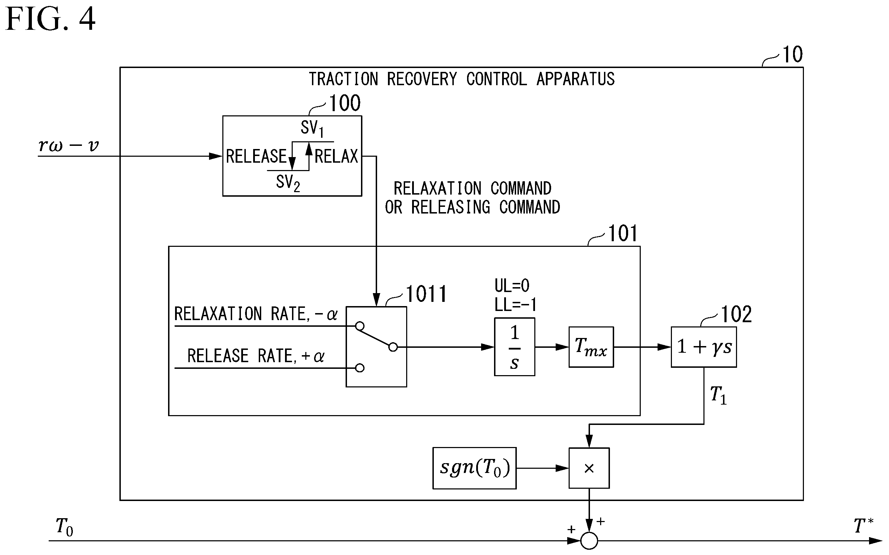

Next, a modification example of the first embodiment will be described with reference to FIGS. 4 to 8.

FIG. 4 is a block diagram showing a functional configuration of a traction recovery control apparatus according to the modification example of the first embodiment.

As shown in FIG. 4, the traction recovery control apparatus 10 may further include a phase compensator 102.

The phase compensator 102 phase-compensates the torque relaxation increase/decrease signal output by the limit cycle generator 101, and maintains the limit cycle in the vicinity of the maximum value of the traction force.

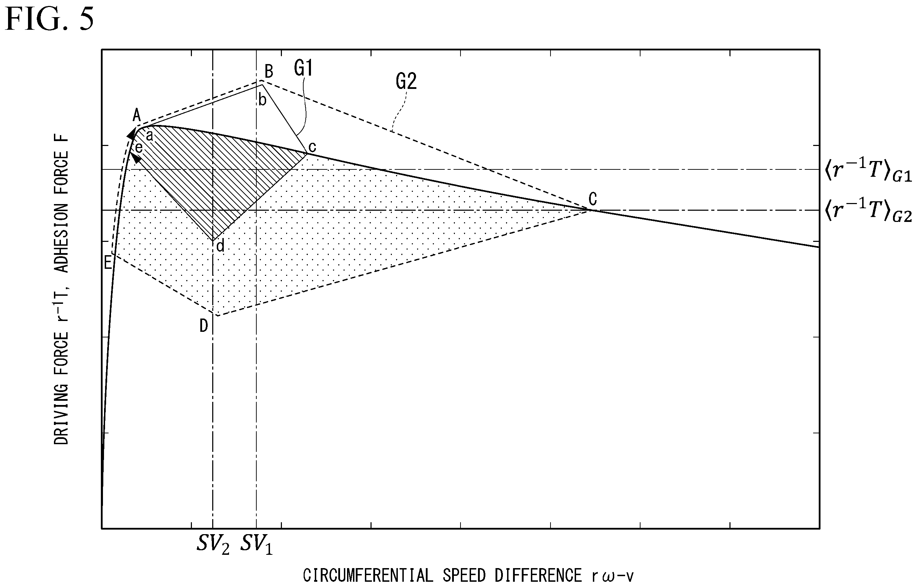

FIGS. 5 to 8 are diagrams for explaining a function of the traction recovery control apparatus according to the modification example of the first embodiment.

Here, a technology of reducing a circumferential length of the trajectory of the limit cycle by the phase compensator 102 will be described with reference to FIGS. 5 to 8.

When a period in which the operating point completes one period along the closed trajectory is denoted by $t_c$, the expected value of the effective driving force $\langle r^{-1}T \rangle$ during a period in which the operating point completes one period of the periodic trajectory is expressed as follows in Formula (4).

[Mathematical Formula 4]

$$\langle r^{-1}T \rangle = \frac{1}{t_c} \int_0^{t_c} \min\{r^{-1}T, F\} \, dt \qquad \cdots (4)$$

FIG. 5 shows a relationship between the size of the closed trajectory and the expected value (mean value) of the driving force. The periodic trajectory G2 (A → B → C → D → E → A) of a broken line is an example of a large periodic trajectory. The periodic trajectory G1 (a → b → c → d → e → a) of the solid line is an example of a small periodic trajectory. The mean value of the driving force is, for example, a value that vertically divides the area inside the graph of the traction force F (shaded area) in half within the range surrounded by a, b, c, d, and e for the periodic trajectory G1. The same applies to the periodic trajectory G2. When the large periodic trajectory G2 and the small periodic trajectory G1 are compared with each other, the mean value of the driving force is larger in the small periodic trajectory G1. Therefore, the vehicle 90 can perform more rapid acceleration or deceleration by the small periodic trajectory G1.

In this manner, when the periodic trajectory of the wheel spin traction recovery is reduced, the expected value of the effective driving force is improved. Therefore, a technology of reducing a periodic trajectory of the wheel spin traction recovery will be described. In the present modification example, as shown in FIG. 4, the traction recovery control apparatus 10 is characterized by using the phase compensator 102 in addition to the slip state determiner 100 and the limit cycle generator 101. In addition, in the present embodiment, a value obtained by phase-compensating the torque relaxation increase/decrease signal output by the limit cycle generator 101 by the phase compensator 102 is the torque relaxation signal $T_1$.

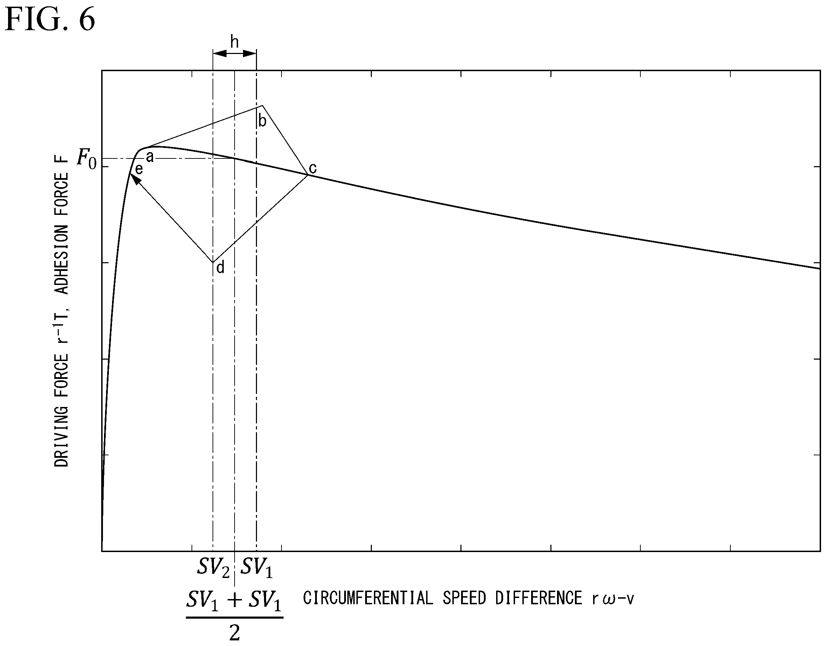

In addition, as shown in FIG. 6, the period and the amplitude of the periodic trajectory (limit cycle) are evaluated on the assumption that the equilibrium point of the circumferential speed difference is between $SV_1$ and $SV_2$. The traction force at the equilibrium point is defined as $F_0$. In order to simplify the evaluation, the traction force F is linearly approximated by the circumferential speed difference as in Formula (5).

[Mathematical Formula 5]

$$F \approx F_0 + C \cdot (r\omega - v) \qquad \cdots (5)$$

The proportionality coefficient C [N/(m/s)] of the traction force is calculated by Formula (6) from the circumferential speed difference and the traction force when the operating point follows a periodic trajectory (for example, a → b → c → d → e → a), but is simply approximated as 0.

[Mathematical Formula 6]

$$C = \frac{1}{t_c} \int_0^{t_c} (F_\tau - F_0)\left(r\omega_\tau - v_\tau - \frac{SV_1 + SV_2}{2}\right) d\tau$$
$$\approx 0 \qquad \cdots (6)$$

A difference between the slip threshold $SV_1$ and the traction threshold $SV_2$ is represented by h as in Formula (7).

[Mathematical Formula 7]

$$h = SV_1 - SV_2 \qquad \cdots (7)$$

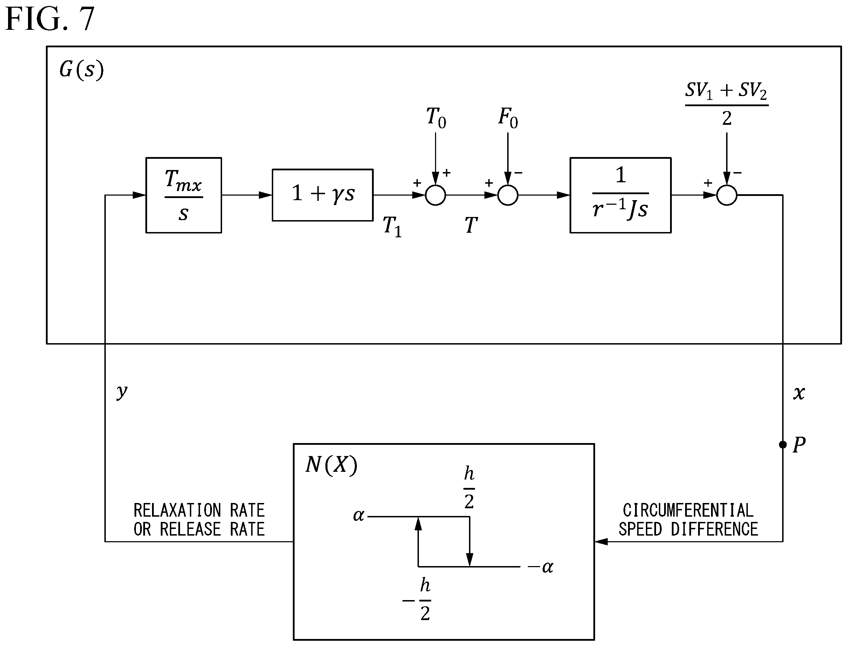

When the operating point forms a periodic trajectory of the wheel spin traction recovery, the closed-loop system of the wheel spin traction recovery control of the present embodiment can be modeled as shown in FIG. 7. A deviation from an equilibrium point of the circumferential speed difference is denoted by x, and a relaxation rate or a release rate is denoted by y. When a transfer function of the linear part of the closed-loop system is represented by G and a description function of the non-linear part is represented by N, the closed-loop system of the wheel spin traction recovery control of the present embodiment is expressed as follows in Formula (8).

[Mathematical Formula 8]

$$\begin{cases} x = Gy \\ y = N(X) \end{cases} \quad \cdots (8)$$

The description function N(X) will be described. The description function approximately represents a relationship between input and output of a non-linear element such as a relay element with a gain and a phase. The relationship between the input and output of the non-linear element depends on the amplitude of the input. In the wheel spin traction recovery control, the non-linear element is a relay with hysteresis, and the input is x and the output is y. A time waveform of the input x is represented by a general sinusoidal wave as follows in Formula (9). X is an amplitude.
[Mathematical Formula 9]

$$x_t = X \sin \omega t \quad \cdots (9)$$

When a periodic input x is given to the non-linear element N, some periodic output y is obtained. The output y can be expressed by a Fourier expansion as follows in Formula (10).
[Mathematical Formula 10]

$$y_t = \sum_{n=1}^{\infty} (A_n \sin n\omega t + B_n \cos n\omega t) \quad \cdots (10)$$

In this case, the description function N(X) is expressed as follows in Formula (11).
[Mathematical Formula 11]

$$N(X) = a + jb \quad \cdots (11)$$

Here, a and b are represented by Formulae (12) and (13). In addition, β in Formulae (12) and (13) is Formula (14).
[Mathematical Formula 12]

$$a = \frac{A_1}{X}$$
$$= \frac{1}{\pi X} \int_0^{2\pi} y_t \sin \omega t \, d(\omega t)$$
$$= -\frac{4\alpha}{\pi X} \cos \beta \quad \cdots (12)$$

[Mathematical Formula 13]

$$b = \frac{B_1}{X}$$
$$= \frac{1}{\pi X} \int_0^{2\pi} y_t \cos \omega t \, d(\omega t)$$
$$= \frac{4\alpha}{\pi X} \sin \beta \quad \cdots (13)$$

[Mathematical Formula 14]

$$\beta = \sin^{-1}\frac{SV_2 - SV_1}{2X} \qquad \cdots (1\,4)$$

By using the description function, it is possible to analyze the periodic trajectory of the limit cycle of the closed-loop system of the wheel spin traction recovery control. The closed loop is considered to be opened at the point P. When a sinusoidal signal of x = Xsin($\omega$t) is given to the input of the relay with hysteresis, a distorted waveform having an angular frequency $\omega$ as a fundamental wave is generated in the output y. However, it is assumed that the harmonic component, which is the component of the distortion, is attenuated by the transfer function G of the linear part, and only Xsin($\omega$t) corresponding to the linear part remains in the output y. In this case, when the point P is closed, the limit cycle of x = Xsin($\omega$t) is sustained in the closed-loop system. A condition for causing the occurrence is Formula (15).
[Mathematical Formula 15]

$$G(j\omega)N(X) = 1 \qquad \cdots (1\,5)$$

Here, G(j$\omega$) is a value of a response function with respect to an angular frequency $\omega$ of the transfer function G(s), and N(X) is a value of the description function N with respect to the amplitude X. Therefore, it is confirmed that a limit cycle is generated when loci of G(j$\omega$) and 1/N(X) are drawn on a complex plane and there is an intersection between the two loci.

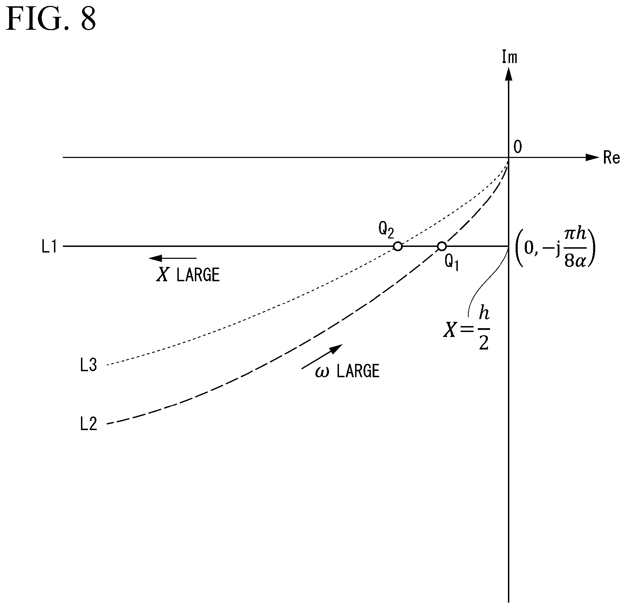

FIG. 8 is an example of a locus of G(j$\omega$) and 1/N(X). The solid line L1 is a locus of 1/N(X), and when the amplitude X is h/2, the solid line L1 is in contact with the imaginary axis Im at coordinates (0, -j$\pi$h/8$\alpha$), and as the amplitude X is increased, the solid line L1 moves away from the imaginary axis Im in the -$\infty$ direction.
Regarding the locus of the transfer function G(j$\omega$) indicated by the broken line L2 and the dotted line L3, G(j$\omega$) is -$\infty$ on the real axis Re when $\omega \to 0$ is satisfied, gradually approaches the imaginary axis Im as the angular frequency $\omega$ increases, and reaches the origin O along the imaginary axis Im when the angular frequency $\omega$ is infinite.
A locus of the transfer function indicated by the dotted line L3 represents a case where the value of the set value $\gamma$ of the phase compensator 102 is small. Since L3 intersects with 1/N(X) at the point $Q_2$, the limit cycle is generated at the amplitude $X_2$ and the angular frequency $\omega_2$ corresponding to the point $Q_2$.
A locus of the transfer function indicated by the broken line L2 represents a case where the value of the set value $\gamma$ of the phase compensator 102 is large. Due to the effect of the phase advance compensation by the set value $\gamma$, the broken line L2 is closer to the imaginary axis than the dotted line L3 and intersects with 1/N(X) at the point $Q_1$. The limit cycle is generated at the amplitude $X_1$ and the angular frequency $\omega_1$ corresponding to the point $Q_1$.
Since the point $Q_1$ is on the right side of the point $Q_2$, the amplitude of X is reduced when $\gamma$ is increased. Since X represents the amplitude of the circumferential speed difference r$\omega$-v, the circumferential speed difference, that is, the slip speed can be reduced by increasing $\gamma$. More specifically, as in the example of FIG. 4, when $\gamma$ is small, a large periodic trajectory such as G2 (A $\to$ B $\to$ C $\to$ D $\to$ E $\to$ A) is generated, and the decrease in the traction force is relatively large. When $\gamma$ is large, a small periodic trajectory is generated as in G1 (a $\to$ b $\to$ c $\to$ d $\to$ e $\to$ a), and the decrease in the traction force is relatively small.
The value of $\gamma$ is determined by performing a test such that the limit cycle includes the maximum value of the traction force and the value of $\gamma$ is maximized.
As described above, the phase compensator 102 can reduce the amplitude of the circumferential speed difference (slip speed) during the generation of the limit cycle and can reduce the decrease in the traction force.

<Second Embodiment>

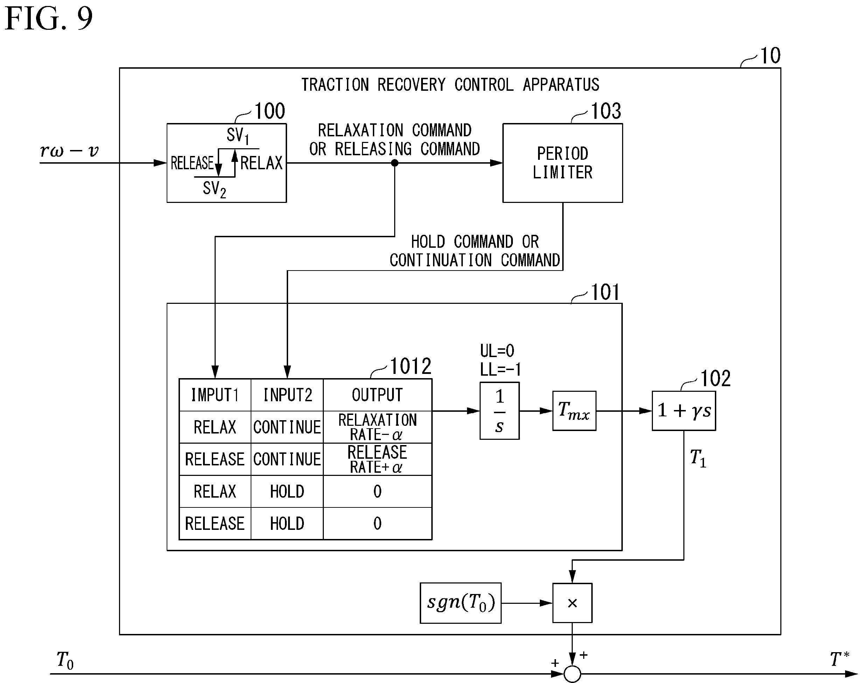

Next, a second embodiment of the present disclosure will be described with reference to FIG. 9. The same reference numerals will be given to the same components as those in the above-described embodiment, and the detailed descriptions thereof will be omitted.
FIG. 9 is a block diagram showing a functional configuration of a traction recovery control apparatus according to the second embodiment.
As shown in FIG. 9, the traction recovery control apparatus 10 according to the present embodiment further includes a period limiter 103. The period limiter 103 limits the period of the limit cycle.
FIG. 9 shows an example in which the period limiter 103 is added to the configuration of the modification example (FIG. 4) of the first embodiment, but the present invention is not limited thereto. In another embodiment, the period limiter 103 may be added to the configuration of the first embodiment (FIG. 2).
The traction recovery control apparatus 10 causes a limit cycle to occur in the vicinity of the maximum value of the traction force during the wheel spin, and makes it possible to continuously obtain the traction force close to the maximum value. For this purpose, it is desirable that the limit cycle is a short period. This is because the circumferential speed difference is increased or decreased in a short period when the positive and negative of the torque relaxation signal $T_1$ are alternated in a short period, and thus the slip is not large.

However, when the period of the limit cycle is an extremely short period and the natural period of the driving system or the braking system of the driving wheel 91 is excited, there is a concern that abnormal vibration may occur. For example, when the natural period of the driving system or the braking system is about 0.1 seconds, it is effective to set the lower limit of the limit cycle period to, for example, about 0.2 seconds to prevent excitation of the natural period of the driving system or braking system.

For this purpose, in the present embodiment, the period limiter 103 is added. The period limiter 103 outputs the hold command until a predetermined time (for example, 0.2 seconds) elapses from a time point when the output of the slip state determiner 100 is switched to the relaxation command or the releasing command, and outputs the continuation command after the predetermined time elapses. The hold command is a command to prohibit the change of the torque increase/decrease signal from the previous value, and the continuation command is a command to permit the change of the torque increase/decrease signal based on the relaxation command or the releasing command.

The limit cycle generator 101 according to the present embodiment determines whether to relax or to release the torque for driving the driving wheel 91 by a determination table 1012 instead of the relaxation release switch 1011. The determination table 1012 outputs a relaxation rate or a release rate of the torque from the first input (INPUT1) and the second input (INPUT2). The output (relaxation command or releasing command) of the slip state determiner 100 is a first input, and the output (hold command or continuation command) of the period limiter 103 is a second input.

The operation of the determination table 1012 and the period limiter 103, which is a feature of the present embodiment, will be described. It is assumed that the output of the slip state determiner 100 changes from the releasing command to the relaxation command, and then immediately after this, for example, 0.1 seconds later, the slip state determiner 100 outputs a releasing command again. A value of the first input of the determination table 1012 is "release". When the period limiter 103 is set to output the hold command until 0.2 seconds elapse from the start of the relaxation command, the period limiter 103 outputs the hold command until 0.2 seconds elapse, and the value of the second input of the determination table is "holding". When the first input is "release" and the second input is "holding", the output of the determination table 1012 is "0" as shown in FIG. 9. In addition, after 0.2 seconds have elapsed, the second input is switched to "continue", and thus the output of the determination table 1012 is "$+\alpha$". As a result, since the previous value of the driving torque is held until 0.2 seconds have elapsed, the limit cycle with a period shorter than 0.2 seconds does not occur. On the other hand, when the same thing occurs in a case where the period limiter 103 is not provided, the driving torque is released without delay and the limit cycle progresses, and thus the limit cycle of the short period cannot be prevented.

In this manner, the period limiter 103 avoids the limit cycle of the short period and suppresses the occurrence of the excitation of the driving system or the braking system.

<Third Embodiment>

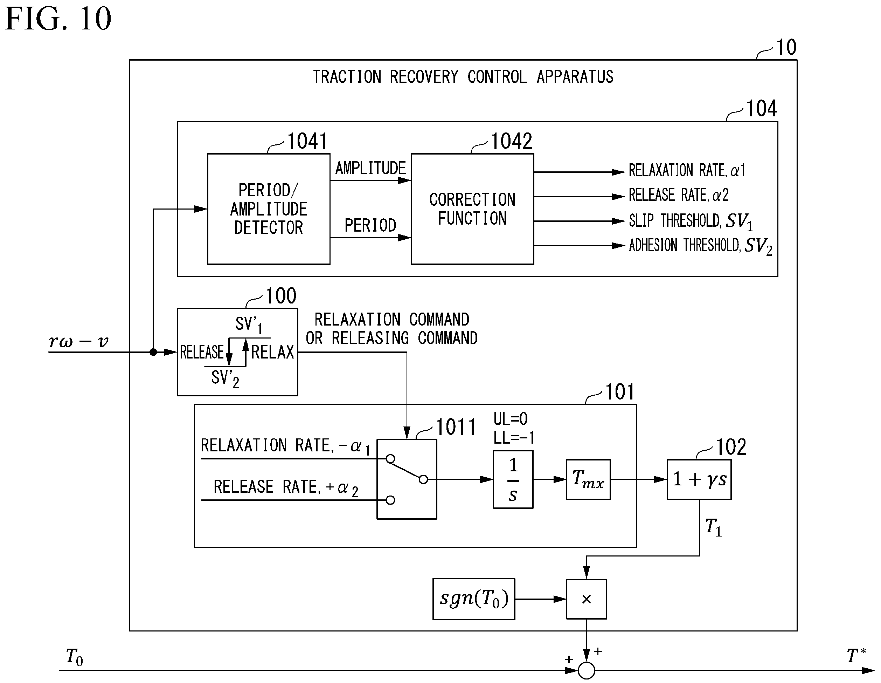

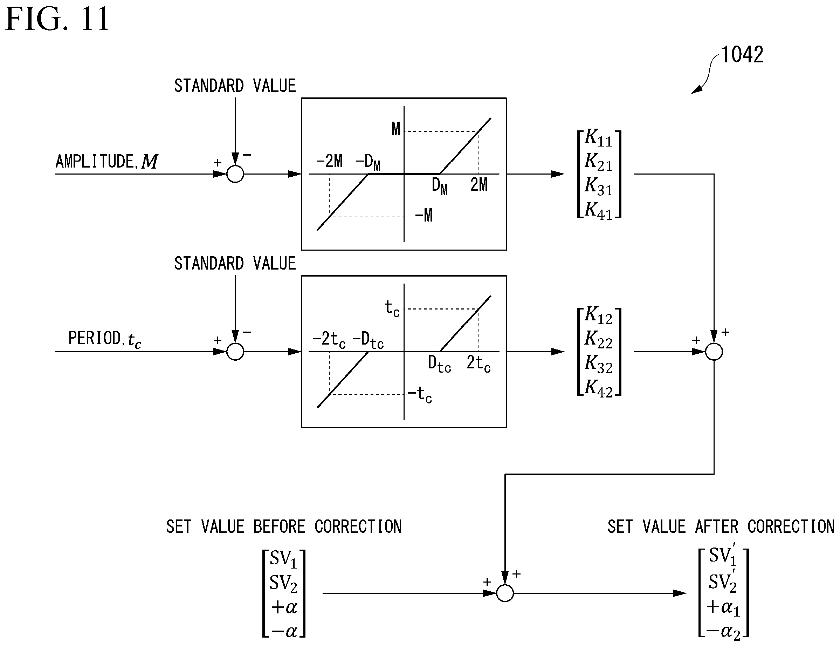

Next, a third embodiment of the present disclosure will be described with reference to FIGS. 10 and 11. The same reference numerals will be given to the same components as those in the above-described embodiment, and the detailed descriptions thereof will be omitted.

FIG. 10 is a block diagram showing a functional configuration of a traction recovery control apparatus according to the third embodiment.

As shown in FIG. 10, the traction recovery control apparatus 10 according to the present embodiment further includes a set value corrector 104. The set value corrector 104 corrects the relaxation rate $\alpha_1$ and the release rate $\alpha_2$ (time change rate), the slip threshold $SV_1$, and the traction threshold $SV_2$ based on the slip speed.

FIG. 10 shows an example in which the set value corrector 104 is added to the configuration of the modification example (FIG. 4) of the first embodiment, but the present invention is not limited thereto. In another embodiment, the set value corrector 104 may be added to the configuration of the first embodiment (FIG. 2) or the second embodiment (FIG. 9).

The relaxation rate $\alpha_1$, the release rate $\alpha_2$, the slip threshold $SV_1$, and the traction threshold $SV_2$, which are the set values of the traction recovery control apparatus 10, have appropriate values for each speed of the vehicle 90. Therefore, these set values may be changed according to the speed of the vehicle. In addition to the speed of the vehicle 90, these set values may be changed based on the normal force W of the wheel of the vehicle 90 with respect to the road surface R, which is measured by a wheel load meter or the like.

There is also a standard value for the amplitude and the period of the limit cycle for each speed of the vehicle 90. In a case where the amplitude or the period of the limit cycle deviates significantly from the standard value, the set value is corrected to suppress the amplitude or the period from deviating significantly from the standard value. Therefore, the set value corrector 104 detects the period $t_c$ and the amplitude M of the limit cycle from the speed of the vehicle 90 by a period/amplitude detector 1041.

FIG. 11 is a diagram for explaining a function of a set value corrector according to the third embodiment.

In a case where the detected amplitude M fluctuates exceeding $\pm D_M$ with respect to the standard value, a correction function 1042 shown in FIG. 11 adjusts each set value in proportion to the excess. Similarly, in a case where the detected period $t_c$ fluctuates exceeding $\pm D_{tc}$ with respect to the standard value, the correction function 1042 adjusts each set value in proportion to the excess.

For example, when the amplitude exceeds $D_M$, the relaxation rate $\alpha_1$ and the release rate $\alpha_2$ are increased in proportion to the degree of excess, and the driving torque is relaxed before the slip speed increases. In addition, the slip threshold $SV_1$ and the traction threshold $SV_2$ are adjusted to be included in the range of the amplitude M. The proportionality coefficients $K_{11}$ and $K_{21}$ for correcting the slip threshold $SV_1$ and the traction threshold $SV_2$ are set to positive values. In addition, the proportionality coefficients $K_{31}$ and $K_{41}$ for correcting the relaxation rate $\alpha_1$ and the release rate $\alpha_2$ are also set to positive values. The correction function 1042 adds the correction amount based on the proportionality coefficient to the set value before correction to determine the set value after correction. Hereinafter, the slip state determiner 100 and the limit cycle generator 101 perform processing using the corrected set values.

In this manner, the traction recovery control apparatus 10 can generate the limit cycle having an appropriate amplitude and period according to the speed of the vehicle 90.

<Fourth Embodiment>

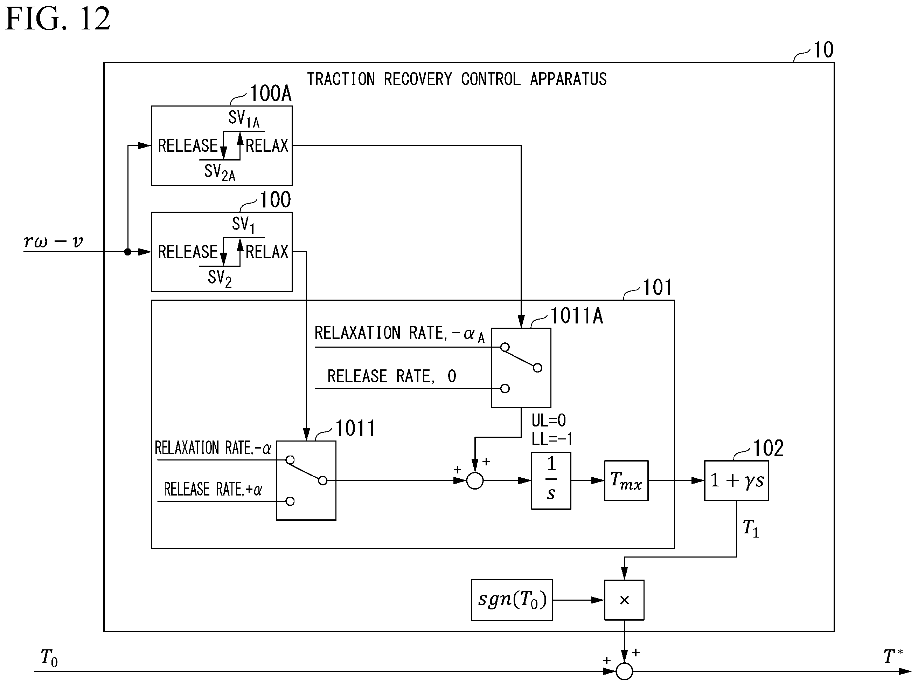

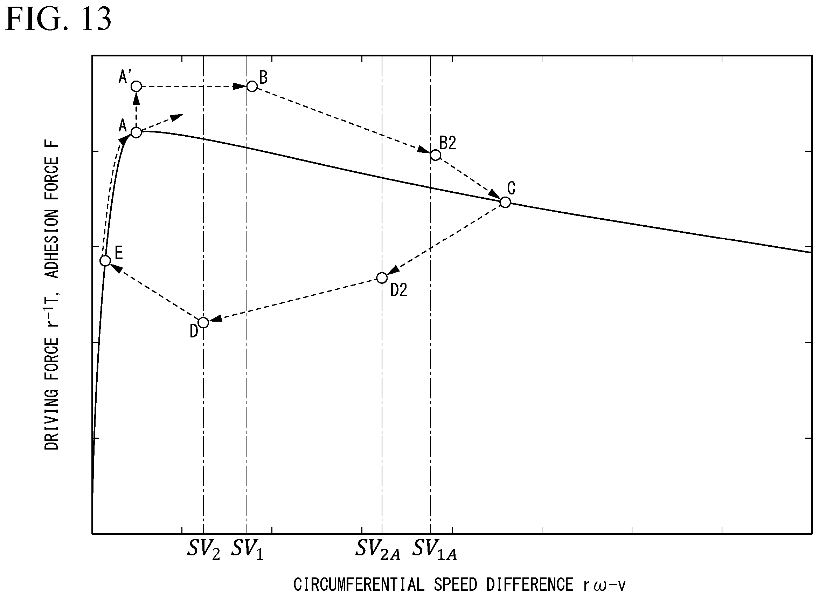

Next, a fourth embodiment of the present disclosure will be described with reference to FIGS. 12 and 13. The same reference numerals will be given to the same components as those in the above-described embodiment, and the detailed descriptions thereof will be omitted.

FIG. 12 is a block diagram showing a functional configuration of a traction recovery control apparatus according to the fourth embodiment.

As shown in FIG. 12, the traction recovery control apparatus 10 according to the present embodiment further includes a second slip state determiner 100A. In addition, the limit cycle generator 101 further includes a second relaxation release switch 1011A, and adjusts the torque relaxation increase/decrease signal based on the output of the second relaxation release switch 1011A.

It should be noted that FIG. 12 shows an example in which the second slip state determiner 100A and the second relaxation release switch 1011A are added to the configuration of the modification example (FIG. 4) of the first embodiment, but the present invention is not limited thereto. In another embodiment, these may be added to the configuration of the first embodiment (FIG. 2), the second embodiment (FIG. 9), or the third embodiment (FIG. 10).

FIG. 13 is a diagram for explaining a function of the traction recovery control apparatus according to the fourth embodiment.

The second slip state determiner 100A has a second slip threshold $SV_{1A}$ and a second traction threshold $SV_{2A}$. As shown in FIG. 13, the second slip threshold $SV_{1A}$ and the second traction threshold $SV_{2A}$ are each set to values larger than the existing slip threshold $SV_1$ and traction threshold $SV_2$.

Then, the second relaxation release switch 1011A sets the second relaxation rate $-\alpha_A$ corresponding to the second slip threshold $SV_{1A}$ and the second release rate 0 corresponding to the second traction threshold $SV_{2A}$. Further, in the above-described embodiment, the increase/decrease rate of the torque relaxation increase/decrease signal is determined only from the output of the relaxation release switch 1011, but in the present embodiment, the increase/decrease rate is determined by the sum of the output of the relaxation release switch 1011 and the output of the second relaxation release switch 1011A.

In a case where the sum is used in this manner, as shown in FIG. 13, $-\alpha_A$ is added to the relaxation rate after the point B2 at which the slip speed exceeds the second slip threshold $SV_{1A}$. As a result, the trajectory of the limit cycle is reduced, and an effective driving force can be increased.

<Computer Configuration>

FIG. 14 is a schematic block diagram showing a configuration of a computer according to at least one embodiment.

A computer 900 includes a processor 901, a main storage device 902, an auxiliary storage device 903, and an interface 904.

The above-described traction recovery control apparatus 10 is mounted on a computer 900. An operation of each processing unit described above is stored in the auxiliary storage device 903 in a form of a program. The processor 901 reads the program from the auxiliary storage device 903, expands the program into the main storage device 902, and executes the above-described processing in accordance with the program. In addition, the processor 901 secures a storage area corresponding to each storage unit mentioned above in the main storage device 902 in accordance with the program.

The program may be used to implement some of the functions of the computer 900. For example, the program may exhibit the functions through a combination with other programs already stored in the auxiliary storage device 903 or a combination with other programs implemented in other devices. In another embodiment, the computer 900 may include a custom large scale integrated circuit (LSI) such as a programmable logic device (PLD), in addition to the above-described configuration or instead of the above-described configuration. A programmable array logic (PAL), a generic array logic (GAL), a complex programmable logic device (CPLD), a field programmable gate array (FPGA), and the like are exemplary examples of the PLD. In this case, some or all of the functions implemented by the processor 901 may be implemented by the integrated circuit.

A hard disk drive (HDD), a solid state drive (SSD), a magnetic disk, a magnetooptical disk, a compact disc read only memory (CD-ROM), a digital versatile disc read only memory (DVD-ROM), a semiconductor memory, and the like are exemplary examples of the auxiliary storage device 903. The auxiliary storage device 903 may be an internal medium connected directly to a bus of the computer 900 or an external storage device 910 connected to the computer 900 via the interface 904 or a communication line. Additionally, in a case where this program is distributed to the computer 900 via the communication line, the computer 900 that has received the distribution may expand the program into the main storage device 902 and execute the above-described processing. In at least one embodiment, the auxiliary storage device 903 is a non-transitory tangible storage medium.

<Supplementary Notes>

The above-described embodiment is understood as follows, for example.
(1) According to a first aspect, the traction recovery control apparatus 10 includes: a slip state determiner 100 configured to determine whether a driving wheel 91 of a vehicle 90 is in a slip state or in a traction state based on a slip speed of the driving wheel 91 with respect to a road surface R, and a slip threshold $SV_1$ and a traction threshold $SV_2$; and a limit cycle generator 101 configured to output an increase/decrease signal for gradually increasing or gradually decreasing a driving force of the driving wheel 91 based on a determination result of the slip state determiner 100, and generate a limit cycle passing through a traction force maximum value between the driving wheel 91 and the road surface R.

With such a configuration, the traction recovery control apparatus 10 can obtain an effect of not only simply restoring traction of the driving wheel 91 that is wheel spin but also maintaining the traction force in a relatively high state by causing the limit cycle to occur around the maximum value of the traction force even when the wheel spin occurs. In addition, since the traction recovery control apparatus 10 does not estimate the traction coefficient as in the related art, it is not necessary to collect data required for the estimation, and the time required for the calculation processing can be significantly shortened. Therefore, the traction recovery control apparatus 10 can perform a highly responsive traction recovery control capable of following a sudden change in the maximum value of the traction coefficient, for example, in a case where wet fallen leaves are run over.

(2) According to a second aspect, the traction recovery control apparatus 10 according to the first aspect, further includes a phase compensator 102 configured to phase-compensate the increase/decrease signal to maintain the limit cycle in the vicinity of the traction force maximum value.

With such a configuration, the traction recovery control apparatus 10 can reduce the amplitude of the circumferential speed difference (slip speed) and reduce the decrease in the traction force during the generation of the limit cycle.

(3) According to a third aspect, the traction recovery control apparatus 10 according to the first or second aspect further includes a period limiter 103 that limits a period of the limit cycle.

With such a configuration, the traction recovery control apparatus 10 can avoid a limit cycle with a short period and suppress the occurrence of the excitation of the driving system or the braking system.

(4) According to a fourth aspect, in the traction recovery control apparatus 10 according to the third aspect, the period limiter 103 outputs a hold command for limiting switching between the gradual increase and the gradual decrease of the driving force in a case where a predetermined time has not elapsed after the determination result of the slip state determiner 100 has switched, and outputs a continuation command for permitting the switching between the gradual increase and the gradual decrease of the driving force in a case where the predetermined time has elapsed, and the limit cycle generator 101 determines the output increase/decrease signal based on a determination table 1012 that defines a combination of the determination result of the slip state determiner 100, the hold command or the continuation command of the period limiter 103, and a value of the increase/decrease signal.

In this manner, the traction recovery control apparatus 10 can suppress the limit cycle having a period shorter than the predetermined time.

(5) According to a fifth aspect, the traction recovery control apparatus 10 according to any one of the first to fourth aspects, further includes a set value corrector 104 configured to correct time change rates $\alpha_1$ and $\alpha_2$ at which the driving force is gradually increased or gradually decreased, the slip threshold $SV_1$, and the traction threshold $SV_2$ based on at least one of a speed of the vehicle 90 and a normal force W of a wheel of the vehicle 90 with respect to the road surface.

With such a configuration, the traction recovery control apparatus 10 can generate the limit cycle having an appropriate amplitude and period according to the speed of the vehicle 90.

(6) According to a sixth aspect, in the traction recovery control apparatus 10 according to the fifth aspect, the set value corrector 104 detects a period and an amplitude of the limit cycle from the speed of the vehicle 90, and corrects the time change rates $\alpha_1$ and $\alpha_2$, the slip threshold $SV_1$, and the traction threshold $SV_2$ in proportion to an excess amount from a standard value set in advance in a case where at least one of the detected period and the detected amplitude fluctuates exceeding a predetermined amount $\pm D_M$ from the standard value.

In this manner, the traction recovery control apparatus 10 can appropriately adjust the limit cycle such that the period and the amplitude of the limit cycle are close to the standard values.

(7) According to a seventh aspect, the traction recovery control apparatus 10 according to any one of the first to sixth aspects, further includes a second slip state determiner 100A configured to determine whether the driving wheel 91 is in a slip state or in a traction state based on the slip speed, a second slip threshold $SV_{1A}$ which is a value larger than the slip threshold $SV_1$, and a second traction threshold $SV_{2A}$ which is a value larger than the traction threshold $SV_2$, and the limit cycle generator 101 adjusts, based on a determination result of the second slip state determiner 100A, the increase/decrease signal based on the determination result of the slip state determiner 100.

With such a configuration, the traction recovery control apparatus 10 can reduce the trajectory of the limit cycle and increase the effective driving force.

(8) According to an eighth aspect, in the traction recovery control apparatus 10 according to any one of the first to seventh aspects, the limit cycle generator 101 outputs an increase/decrease signal for gradually increasing or gradually decreasing a braking force of the driving wheel 91 instead of the driving force of the driving wheel 91.

With such a configuration, the traction recovery control apparatus 10 can simply restore traction of the driving wheel 91 that has skidded during regeneration, and can obtain an effect of causing the limit cycle to occur around the maximum value of the traction force even when the skidding occurs, and maintaining the traction force in a relatively high state.

(9) According to a ninth aspect, the traction recovery control method includes: a step of determining whether a driving wheel 91 of a vehicle 90 is in a slip state or in a traction state based on a slip speed of the driving wheel 91 with respect to a road surface R, and a slip threshold $SV_1$ and a traction threshold $SV_2$; and a step of outputting an increase/decrease signal for gradually increasing or gradually decreasing a driving force of the driving wheel 91 based on a determination result on whether the driving wheel 91 is in a slip state or in a traction state, and generating a limit cycle passing through a traction force maximum value between the driving wheel 91 and the road surface R.

(10) According to a tenth aspect, there is provided a program that causes the traction recovery control apparatus 10 to execute a step of determining whether a driving wheel 91 of a vehicle 90 is in a slip state or in a traction state based on a slip speed of the driving wheel 91 with respect to a road surface R, and a slip threshold $SV_1$ and a traction threshold $SV_2$, and a step of outputting an increase/decrease signal for gradually increasing or gradually decreasing a driving force of the driving wheel 91 based on a determination result on whether the driving wheel 91 is in a slip state or in a traction state, and generating a limit cycle passing through a traction force maximum value between the driving wheel 91 and the road surface R.

INDUSTRIAL APPLICABILITY

According to the above aspect, it is possible to restore traction of the driving wheel to the road surface when the wheel spin or the skidding occurs and to maintain the traction force between the driving wheel and the road surface in a high state.

REFERENCE SIGNS LIST

10 Traction recovery control apparatus
100 Slip state determiner
100A Second slip state determiner
101 Limit cycle generator
1011 Relaxation release switch
1011A Second relaxation release switch
1012 Determination table
102 Phase compensator
103 Period limiter
104 Set value corrector

1041 Period/Amplitude detector
1042 Correction function
20 Power unit
90 Vehicle
91 Driving wheel
900 Computer
901 Processor
902 Main storage device
903 Auxiliary storage device
904 Interface
910 External storage device

**Claims**

1. A traction recovery control apparatus comprising:

   a slip state determiner configured to determine whether a driving wheel of a vehicle is in a slip state or in a traction state based on a slip speed of the driving wheel with respect to a road surface, and a slip threshold and a traction threshold; and
   a limit cycle generator configured to output an increase/decrease signal for gradually increasing or gradually decreasing a driving force of the driving wheel based on a determination result of the slip state determiner, and generate a limit cycle passing through a traction force maximum value between the driving wheel and the road surface.

2. The traction recovery control apparatus according to Claim 1, further comprising:
   a phase compensator configured to phase-compensate the increase/decrease signal to maintain the limit cycle in a vicinity of the traction force maximum value.

3. The traction recovery control apparatus according to Claim 1, further comprising:
   a period limiter configured to limit a period of the limit cycle.

4. The traction recovery control apparatus according to Claim 3, wherein

   the period limiter outputs a hold command for limiting switching between the gradual increase and the gradual decrease of the driving force in a case where a predetermined time has not elapsed after the determination result of the slip state determiner has switched, and outputs a continuation command for permitting the switching between the gradual increase and the gradual decrease of the driving force in a case where the predetermined time has elapsed, and
   the limit cycle generator determines the output increase/decrease signal based on a determination table that defines a combination of the determination result of the slip state determiner, the hold command or the continuation command of the period limiter, and a value of the increase/decrease signal.

5. The traction recovery control apparatus according to Claim 1, further comprising:
   a set value corrector configured to correct a time change rate at which the driving force is gradually increased or gradually decreased, the slip threshold, and the traction threshold based on at least one of a speed of the vehicle and a normal force of a wheel of the vehicle with respect to the road surface.

6. The traction recovery control apparatus according to Claim 5, wherein

   the set value corrector
   detects a period and an amplitude of the limit cycle from the speed of the vehicle, and
   corrects the time change rate, the slip threshold, and the traction threshold in proportion to an excess amount from a standard value set in advance in a case where at least one of the detected period and the detected amplitude fluctuates exceeding a predetermined amount from the standard value.

7. The traction recovery control apparatus according to Claim 1, further comprising:

a second slip state determiner configured to determine whether the driving wheel is in a slip state or in a traction state based on the slip speed, a second slip threshold which is a value larger than the slip threshold, and a second traction threshold which is a value larger than the traction threshold, wherein

the limit cycle generator adjusts, based on a determination result of the second slip state determiner, the increase/decrease signal based on the determination result of the slip state determiner.

8. The traction recovery control apparatus according to any one of Claims 1 to 7, wherein
the limit cycle generator outputs an increase/decrease signal for gradually increasing or gradually decreasing a braking force of the driving wheel instead of the driving force of the driving wheel.

9. A traction recovery control method comprising:

a step of determining whether a driving wheel of a vehicle is in a slip state or in a traction state based on a slip speed of the driving wheel with respect to a road surface, and a slip threshold and a traction threshold; and
a step of outputting an increase/decrease signal for gradually increasing or gradually decreasing a driving force of the driving wheel based on a determination result of the slip state determiner, and generating a limit cycle passing through a traction force maximum value between the driving wheel and the road surface.

10. A program that causes a traction recovery control apparatus to execute:

a step of determining whether a driving wheel of a vehicle is in a slip state or in a traction state based on a slip speed of the driving wheel with respect to a road surface, and a slip threshold and a traction threshold; and
a step of outputting an increase/decrease signal for gradually increasing or gradually decreasing a driving force of the driving wheel based on a determination result of the slip state determiner, and generating a limit cycle passing through a traction force maximum value between the driving wheel and the road surface.

FIG. 1

# FIG. 2

FIG. 3

DRIVING FORCE $r^{-1}T$, ADHESION FORCE F

CIRCUMFERENTIAL SPEED DIFFERENCE $r\omega - v$

# FIG. 4

EP 4 596 300 A1

FIG. 5

EP 4 596 300 A1

FIG. 6

FIG. 7

$G(s)$

$$\frac{SV_1 + SV_2}{2}$$

$T_0$ $F_0$

$$\frac{T_{mx}}{s}$$ $1 + \gamma s$ $$\frac{1}{r^{-1}Js}$$

$T_1$ $T$

$y$ $x$

$P$

$N(X)$

RELAXATION RATE
OR RELEASE RATE

$\alpha$

$$\frac{h}{2}$$

$-\alpha$

$$-\frac{h}{2}$$

CIRCUMFERENTIAL
SPEED DIFFERENCE

EP 4 596 300 A1

FIG. 8

# FIG. 9

TRACTION RECOVERY CONTROL APPARATUS

$rw - v$

100

$SV_1$
RELEASE → RELAX
$SV_2$

RELAXATION COMMAND
OR RELEASING COMMAND

103
PERIOD LIMITER

HOLD COMMAND OR
CONTINUATION COMMAND

101

1012

| IMPUT1 | INPUT2 | OUTPUT |
|--------|--------|--------|
| RELAX | CONTINUE | RELAXATION RATE-$\alpha$ |
| RELEASE | CONTINUE | RELEASE RATE+$\alpha$ |
| RELAX | HOLD | 0 |
| RELEASE | HOLD | 0 |

UL=0
LL=-1

$\dfrac{1}{s}$

$T_{mx}$

102

$1 + \gamma s$

$T_1$

$sgn(T_0)$ → $\times$

$T_0$

$+$ $+$

$T^*$

EP 4 596 300 A1

# FIG. 10

TRACTION RECOVERY CONTROL APPARATUS — 10

104

1041 — PERIOD/ AMPLITUDE DETECTOR

1042 — CORRECTION FUNCTION

AMPLITUDE → CORRECTION FUNCTION
PERIOD → CORRECTION FUNCTION

→ RELAXATION RATE, $\alpha 1$
→ RELEASE RATE, $\alpha 2$
→ SLIP THRESHOLD, $SV_1$
→ ADHESION THRESHOLD, $SV_2$

100

$r\omega - v$

$SV'_1$
RELEASE ↓ ↑ RELAX
$SV'_2$

RELAXATION COMMAND OR RELEASING COMMAND

101

UL=0
LL=−1

1011

RELAXATION RATE, $-\alpha_1$
RELEASE RATE, $+\alpha_2$

$\dfrac{1}{s}$   $T_{mx}$

102

$1 + \gamma s$

$T_1$

$sgn(T_0)$ → $\times$

$T_0$ ————————→ (+) (+) ————————→ $T^*$

EP 4 596 300 A1

# FIG. 11

SET VALUE BEFORE CORRECTION

$$\begin{bmatrix} SV_1 \\ SV_2 \\ +\alpha \\ -\alpha \end{bmatrix}$$

SET VALUE AFTER CORRECTION

$$\begin{bmatrix} SV_1' \\ SV_2' \\ +\alpha_1 \\ -\alpha_2 \end{bmatrix}$$

EP 4 596 300 A1

FIG. 12

TRACTION RECOVERY CONTROL APPARATUS — 10

$r\omega - v$

100A — $SV_{1A}$ / $SV_{2A}$ — RELAX / RELEASE

100 — $SV_1$ / $SV_2$ — RELAX / RELEASE

1011A — RELAXATION RATE, $-\alpha_A$ / RELEASE RATE, 0

101

1011 — RELAXATION RATE, $-\alpha$ / RELEASE RATE, $+\alpha$

$UL=0$, $LL=-1$

$\dfrac{1}{s}$

$T_{mx}$

$\dfrac{1}{1+\gamma s}$ — 102 — $T_1$

$sgn(T_0)$

$\times$

$T_0$

$T^*$

FIG. 13

# FIG. 14

# FIG. 15

## INTERNATIONAL SEARCH REPORT

| International application No. |
|---|
| **PCT/JP2023/034677** |

| **A.** | **CLASSIFICATION OF SUBJECT MATTER** |
|---|---|

**B60L 15/20**(2006.01)i
FI: B60L15/20 Y

According to International Patent Classification (IPC) or to both national classification and IPC

| **B.** | **FIELDS SEARCHED** |
|---|---|

Minimum documentation searched (classification system followed by classification symbols)

B60L15/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 60-98804 A (MITSUBISHI DENKI KK) 01 June 1985 (1985-06-01) | 1, 9-10 |
| | page 1, lower right column, line 15 to page 2, upper right column, the last line, fig. 1 | |
| Y | | 5, 8 |
| A | | 2-4, 6-7 |
| Y | JP 2012-10504 A (NAGAOKA UNIV. OF TECHNOLOGY) 12 January 2012 (2012-01-12) | 5, 8 |
| | paragraph [0008] | |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 November 2023** | **12 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/034677**

| Patent document cited in search report | | | Publication date (day/month/year) | Patent family member(s) | Publication date (day/month/year) |
|---|---|---|---|---|---|
| JP | 60-98804 | A | 01 June 1985 | (Family: none) | |
| JP | 2012-10504 | A | 12 January 2012 | (Family: none) | |

Form PCT/ISA/210 (patent family annex) (January 2015)

**REFERENCES CITED IN THE DESCRIPTION**

**Patent documents cited in the description**

- JP 2022165435 A
- JP 5940290 B